# FASCICULE DE BREVET EUROPEEN

(11) **EP 1 369 050 B1**
(45) Date de publication et mention de la délivrance du brevet: **23.03.2005**
(21) Numéro de dépôt: 03011094.4
(22) Date de dépôt: 21.05.2003
(51) Int. Cl.: A43C 11/14, A43C 11/00

(54) **Dispositif destiné à équiper une chaussure de sport**
Vorrichtung für Sportschuh
Device for sport shoe

(30) Priorité: 03.06.2002 CH 9242002
(43) Date de publication de la demande: 10.12.2003
(73) Titulaire: LANGE INTERNATIONAL S.A., 1700 Fribourg (CH)
(72) Inventeur: Cagliari, Peter, 31044 Montebelluna (TV) (IT)
(74) Mandataire: Meylan, Robert Maurice

(56) Documents cités:
- EP-A- 0 880 912
- EP-A- 0 978 238
- AT-B- 297 538
- US-A- 2 145 118
- US-A1- 2002 035 793

## Description

La présente invention concerne un dispositif destiné à équiper une chaussure de sport et à être manipulé, tel qu'un dispositif de fermeture et de serrage, un dispositif d'accrochage ou un dispositif de réglage, ce dispositif comprenant une pièce réalisée par surmoulage d'un élément en matière synthétique sur une âme rigide.

Pour des raisons de coût, d'apparence et de poids, il est connu de réaliser des dispositifs fermeture et de serrage de chaussure de sport, en particulier des chaussures de ski, au moins partiellement en matière synthétique.

Du brevet autrichien AT 297 538 on connaît un dispositif de fermeture et de serrage dont le levier tendeur est constitué d'un profilé en tôle d'acier enrobé de matière synthétique par surinjection. Le profilé en tôle assure la résistance mécanique du levier tandis que la matière plastique permet de donner au levier l'aspect esthétique souhaité.

De la demande EP 0 880 912 on connaît également un dispositif de serrage de chaussure de ski à boucle et levier tendeur dont l'une au moins des deux parties est constituée de deux éléments moulés l'un sur l'autre et présentant des modules d'élasticité et/ou des couleurs différentes. Les deux éléments peuvent être en matière synthétique.

Il est par ailleurs connu d'apposer des inscriptions ou des décors sur les boucles de chaussure. Les boucles étant exposées aux agressions extérieures, en particulier aux coups accidentels reçus des carres des skis, ces inscriptions ou décors ont tendance à s'abîmer avec le temps, nuisant ainsi à l'aspect des boucles et de la chaussure.

La présente invention a pour but d'assurer la permanence de l'aspect originel des inscriptions ou décors des boucles ou autre dispositif destiné à équiper une chaussure de sport.

Le dispositif selon l'invention est défini à la revendication 1.

L'âme peut être en métal ou en matière synthétique suffisamment résistante.

L'invention a également pour objet un procédé de fabrication défini à la revendication 4.

Le dessin annexé représente, à titre d'exemple, un mode d'exécution de l'invention.

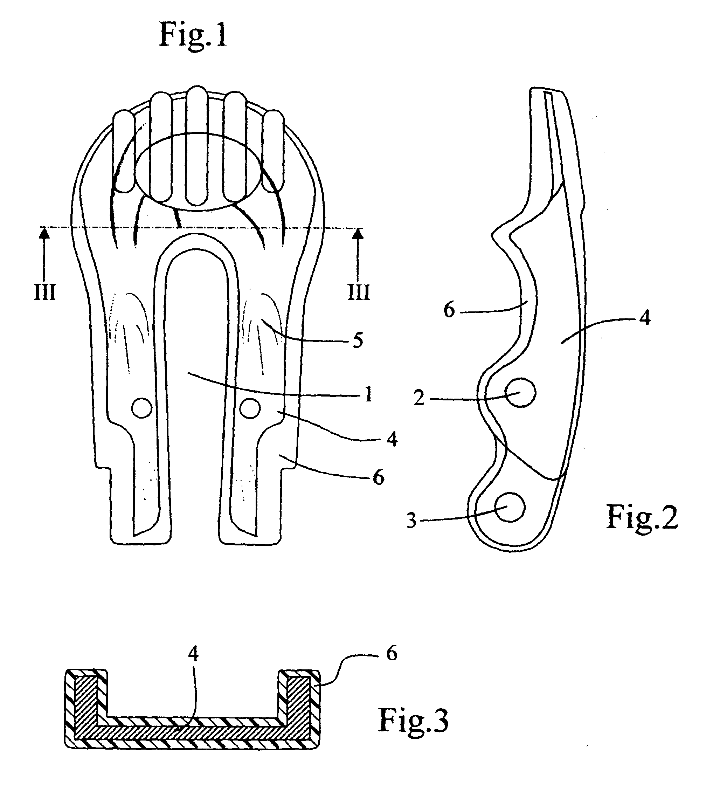

La figure 1 est une vue en plan d'un levier-tendeur d'un dispositif de fermeture et de serrage d'une chaussure de ski.

La figure 2 en représente une vue de profil.

La figure 3 est une vue en coupe selon III-III de la figure 1.

Le levier-tendeur représenté présente une forme générale bien connue caractérisée par une découpe axiale 1 formant deux bras entre lesquels est articulée une pièce d'accrochage non représentée, par exemple un tirant relié à une boucle. Ce tirant est articulé autour d'un axe passant par une paire de trous 2, le levier-tendeur présentant une paire de trous 3 pour son articulation sur une embase.

Ce levier-tendeur comprend une âme 4 en métal, par exemple en acier, sur laquelle sont apposés des décors tels que le décor 5. L'âme 4 est enrobée par surmoulage d'une matière synthétique transparente ou translucide 6. Dans l'exemple considéré cette matière synthétique est du Mafran (Marque déposée), c'est-à-dire un polyuréthane. Cette matière synthétique est relativement tendre et douce au toucher. Le surmoulage peut se faire par injection ou coulée.

Le décor 5 peut être apposé par tous moyens étant donné qu'il est protégé par la matière synthétique 6. Il est possible de l'apposer par exemple par peinture, par gravure ou par impression, sérigraphie ou tempographie ou encore par emboutissage.

Le décor 5 peut être remplacé par une inscription et/ou une graduation ou accompagné d'une inscription et/ou d'une graduation.

Si, comme dans le mode d'exécution considéré ici, l'âme 4 est en métal, tout plastique peut être utilisé pour le surmoulage. Par contre, si l'âme 4 est en matière synthétique, la matière synthétique 6 surinjectée devra être compatible avec la matière de l'âme. La matière plastique peut être incolore ou colorée.

## Revendications

1. Dispositif de serrage et fermeture, d'accrochage ou de réglage de chaussure de sport comprenant au moins une pièce manipulable (6) réalisée par surmoulage de matière synthétique sur une âme rigide (4), **caractérisé en ce que** l'âme porte un décor (5) et/ou une inscription et/ou une graduation et **en ce que** la matière synthétique (6) surmoulée est transparente ou translucide.

2. Dispositif selon la revendication 1, **caractérisé en ce que** l'âme(4) est en métal.

3. Dispositif selon la revendication 1, **caractérisé en ce que** l'âme (4) est également en matière synthétique.

4. Procédé de fabrication d'une pièce de dispositif selon l'une des revendications 1 à 3, comprenant l'étape consistant à réaliser une âme (4) en matériau rigide, **caractérisé en ce qu'**il comprend les étapes suivantes :
- décorer cette âme par peinture, par impression, par gravure ou par emboutissage,
- réaliser autour de cette âme, par un procédé de surmoulage, une enveloppe (6) en matière synthétique transparente ou translucide.

## Patentansprüche

1. Vorrichtung zum Spannen und Schliessen, zum Verhaken oder zum Einstellen eines Sportschuhs, mit wenigstens einem manipulierbarem Teil (6), das durch Überformung eines starren Kerns (4) mit Kunststoff gebildet ist, **dadurch gekennzeichnet, dass** dieser Kern eine Verzierung (5) und/oder eine Inschrift und/oder eine Gradeinteilung trägt und dass der aufgebrachte Kunststoff (6) transparent oder transluzid ist.

2. Vorrichtung nach Anspruch 1, **dadurch gekennzeichnet, dass** der Kern (4) aus Metall besteht.

3. Vorrichtung nach Anspruch 1, **dadurch gekennzeichnet, dass** der Kern (4) ebenfalls aus Kunststoff besteht.

4. Verfahren zur Herstellung eines Teils der Vorrichtung nach einem der Ansprüche 1 bis 3, welches den Schritt der Herstellung eines Kerns (4) aus starrem Material umfasst, **dadurch gekennzeichnet, dass** es folgende Schritte umfasst:
- Verzieren dieses Kerns durch Anstreichen, durch Bedrucken, durch Gravieren oder durch Tiefen,
- Umhüllen dieses Kerns mit einer Umhüllung (6) aus transparentem oder transluzidem Material mittels eines Überformungsprozesses.

## Claims

1. Tightening/closure, attaching or adjusting device for sports footwear, comprising at least one piece (6) that can be manipulated produced by overmoulding a synthetic material on a rigid core (4), **characterized in that** the core bears a decoration (5) and/or an inscription and/or a graduation, and **in that** the overmoulded synthetic material (6) is transparent or translucent.

2. Device according to Claim 1, **characterized in that** the core (4) is made from metal.

3. Device according to Claim 1, **characterized in that** the core (4) is also made from synthetic material.

4. Method for manufacturing a piece of a device according to one of Claims 1 to 3, comprising the step consisting in producing a core (4) from rigid material, **characterized in that** it comprises the following steps:
- decorating this core by painting, printing, engraving or stamping;
- using an overmoulding process, producing, around this core, an envelope (6) made from transparent or translucent synthetic material.
